# EUROPEAN PATENT APPLICATION

(11) **EP 4 650 280 A1**
(43) Date of publication of application: **19.11.2025**
(21) Application number: 24741758.7
(22) Date of filing: 12.01.2024
(51) Int. Cl.: B64U 30/30, B64U 50/13, B64U 10/00, B64C 39/02

(54) **LOW-NOISE THRUST GENERATION APPARATUS AND UNMANNED AERIAL VEHICLE COMPRISING SAME**

(30) Priority: 13.01.2023 KR 20230005574; 11.01.2024 KR 20240004896
(71) Applicant: Korea Advanced Institute of Science and Technology, Daejeon 34141 (KR)
(72) Inventor: JEON, Wonju, Daejeon 34141 (KR); KIM, Jiwan, Daejeon 34141 (KR); LEE, Kiyong, Daejeon 34141 (KR); CHOI, Eunji, Daejeon 34141 (KR); YANG, Eunjin, Daejeon 34141 (KR)
(74) Representative: Kraus & Lederer PartGmbB
(86) International application number: PCT/KR2024/000649
(87) International publication number: WO 2024/151137

(57) **Abstract**

The present disclosure relates to a thrust generation apparatus for an unmanned aerial vehicle such as a drone, and more specifically, to a low-noise thrust generation apparatus which generates a similar level of thrust as a typical propeller unmanned aerial vehicle while generating less noise, and an unmanned aerial vehicle comprising same.

## Description

### [Technical Field]

The present disclosure relates to a thrust generation apparatus for an unmanned aerial vehicle such as a drone, and more particularly, to a low-noise thrust generation apparatus which generates a similar level of thrust as a typical propeller unmanned aerial vehicle while generating less noise, and an unmanned aerial vehicle including the same.

### [Background Art]

Drones, which are a type of unmanned aerial vehicles, are being used in a wide variety of fields, application areas including public services (disaster response, crime prevention, traffic systems), media (aerial photography, broadcasting), communication platforms, agriculture, exploration, and research, and their market size is growing rapidly.

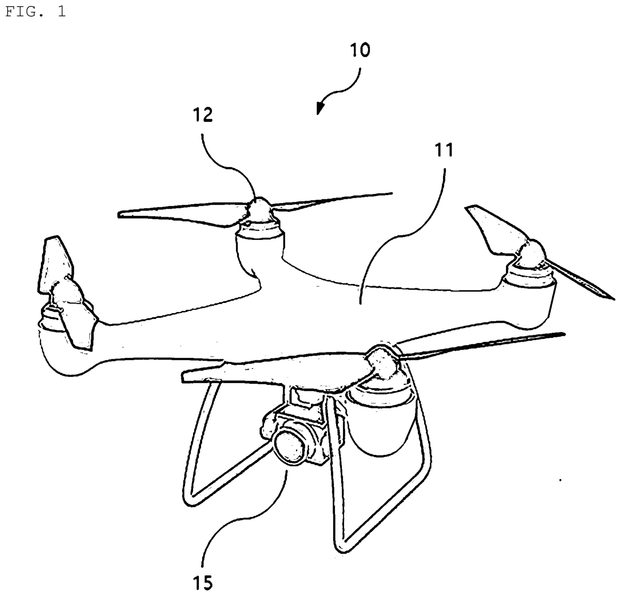

FIG. 1 illustrates a perspective view of a typical drone 10. As illustrated, the drone 10 may include a body 11, a thrust generation apparatus 12 for providing thrust to the body 11 to fly the body 11, and a camera unit 15 equipped on the body 11 for performing a given task such as monitoring. The thrust generation apparatus 12 generally includes a propeller and a motor for rotating the propeller, and generates thrust to the body 11 by a high-speed rotation of the propeller.

In order for such conventional drones 10 to be utilized and be closely related to our daily lives, safety and noise issues caused by high-speed rotating propellers should be resolved. That is, in order for the drone 10 to obtain thrust, the plurality of high-speed rotating propellers are essential, but there is a risk of accidents occurring when birds, large insects, etc., collide with the rotating propellers, and the case where propellers rotating at a speed of about 10,000 RPM collide with people may lead to a major accident causing serious injury.

In addition to the safety issues, aerodynamic noise generated by the high-speed rotating propellers acts as a great stress on the surrounding environment where the drone flies. Small drones sold on the market generate noise of about 70 to 80 dB within a 1m distance, which is a similar level of noise to noise generated when using a vacuum cleaner. According to the preliminary survey results described in psychoacoustic characteristics of noise from small unmanned aerial systems of NASA, it was reported that, when people heard noise generated from cars and drones at the same intensity, people felt the noise from drones to be more than twice as loud as noise from cars.

Therefore, there is a demand for the development of the thrust generation apparatus and the unmanned aerial vehicle including the same, which generate the same or equivalent level of thrust compared to a propeller-type unmanned aerial vehicle, while also having excellent safety and reducing noise.

### [Disclosure]

### [Technical Problem]

An object of the present disclosure is to provide a low-noise thrust generation apparatus including a pipe-shaped air guide that transmits air supplied from an outside and an air duct that generates thrust by injecting the air supplied from the air guide into a narrow gap, and an unmanned aerial vehicle including the same.

In particular, the air duct of the present disclosure generates thrust through a reaction force caused by air injection, and generates additional thrust through a static pressure difference generated by the Coanda effect and induced flow rate, thereby providing a low-noise thrust generation apparatus capable of generating about twice as much thrust as a simple air injection, and an unmanned aerial vehicle including the same.

### [Technical Solution]

In one general aspect, a low-noise thrust generation apparatus includes: an air duct that is formed in a ring shape or an oval shape or a track shape, has a first air flow path formed inside, and includes an injection port communicating with the first air flow path and formed on an inner wall surface to inject air supplied to the first air flow path downward; and an air guide that has a second air flow path formed inside to be communicated with the first air flow path, and coupled with the air duct to transmit air introduced into the second air flow path to the first air flow path.

The injection port may penetrate the inner wall surface of the air duct and may be formed along a circumferential direction on an upper side of the inner wall surface of the air duct.

The low-noise thrust generation apparatus may further include an air supply means that is provided on the second air flow path of the air guide to supply air to the air duct.

The air supply means may include a blower fan that transfers the air by rotation, a motor that rotates the fan, and a driving unit that drives the motor.

The air duct may have a cross-section in a shape of an airfoil, and an outer wall surface may be an upper surface of the airfoil, the inner wall surface may be a lower surface, an upper side may be a leading edge of the airfoil, and a lower side may be a trailing edge of the airfoil.

The air duct may have a cross-sectional area of the inner wall surface that becomes narrower as the inner wall surface goes downward from the injection port by a certain distance, and the cross-sectional area of the inner wall surface that becomes wider as the inner wall surface goes downward from the air duct by a certain distance.

The air duct may be composed of an outer plate forming an outer wall surface and an inner plate forming the inner wall surface, the outer plate may include a top plate that has an upper end portion formed to extend radially inwardly and has an inner end portion convexly rounded upward so that the inner end portion faces radially outward, the inner plate may extend radially inwardly from a lower end of the outer plate, but extend inclinedly upwardly as the inner plate goes radially inward, and an inner end portion of the inner plate may overlap the inner end portion of the top plate, a gap space may be formed between the inner end portion of the top plate and the inner end portion of the inner plate, and the injection port may be formed through the gap space.

An injection angle of the injection port may be 40° to 70° based on a vertical direction in case of a flat shape, and an inclination of the inner plate may be 10° to 20° based on the vertical direction in the case of a convex or concave shape.

A diameter of a lower end of an outer wall surface of the air duct may be 55 mm to 70 mm.

An end portion of the top plate, where the injection port is formed, may be formed in a chevron shape in which a length extended from the outer plate repeatedly increases and decreases along the circumferential direction to form a chevron-shaped injection port.

The injection port may have a uniform or non-uniform gap width formed along the circumferential direction of the inner wall surface of the air duct.

In another general aspect, an unmanned aerial vehicle includes: a body provided with an air inlet; and the low-noise thrust generation apparatus described above, in which a front end of the air guide is coupled to the body to transmit air introduced into the body to the air duct.

The thrust generation apparatus may be arranged in plurality, radially spaced apart around the body.

The unmanned aerial vehicle may further include an air supply means provided inside the body to supply air to the air guide.

The air guide may be coupled to the body so as to be rotatable along an axial direction, and may change a thrust direction of the air duct by the rotation.

The air guide may be formed of a pipe having a constant cross-sectional area or an expanded pipe having an increasing cross-sectional area toward the air duct.

### [Advantageous Effects]

The low-noise thrust generation apparatus of the present disclosure and the unmanned aerial vehicle including the same according to the above configuration do not include the propeller that is exposed to the outside and rotates at high speed, so the safety is increased and the noise is reduced compared to the existing propeller rotation type thrust generation apparatus.

Through the above effects, there is an effect that allows the operation of the unmanned aerial vehicle in a densely populated urban area or at night when the possibility of noise complaints is high.

In addition, there is an effect that allows the operation of the unmanned aerial vehicle even in the area where the operation of the existing propeller rotation type unmanned aerial vehicle is impossible due to the frequent appearance of birds or large insects.

### [BRIEF DESCRIPTION OF THE DRAWINGS]

FIG. 1 is a perspective view of a general drone.
FIG. 2 is a perspective view of an unmanned aerial vehicle according to an embodiment of the present disclosure.
FIG. 3 is an exploded perspective view of an air guide illustrating an air supplier inside the air guide according to an embodiment of the present disclosure.
FIG. 4 is a partial cross-sectional perspective view of a thrust generating apparatus according to a first embodiment of the present disclosure.
FIG. 5 is a partial plan view of an unmanned aerial vehicle illustrating an expanded air guide according to an embodiment of the present disclosure.
FIG. 6 is a front view of the expanded air guide according to an embodiment of the present disclosure.
FIG. 7 is a drawing illustrating a thrust generating principle of a thrust generation apparatus according to an embodiment of the present disclosure.
FIG. 8 is a cross-sectional perspective view of an air duct according to the first embodiment of the present disclosure.
FIG. 9 is a plan view of an air duct according to the first embodiment of the present disclosure.
FIG. 10 is a graph illustrating thrust (in the unit[gf]) according to a width (mm) of an injection port of variously shaped air ducts by model.
FIG. 11 is a perspective view of a thrust generating apparatus according to a second embodiment of the present disclosure.
FIG. 12 is a cross-sectional perspective view of an air duct according to the second embodiment of the present disclosure.
FIG. 13 is a diagram illustrating the results of comparing the noise spectrum during rotation of the air duct to which a chevron-shaped injection port according to the second embodiment of the present disclosure is applied and a propeller generating a similar level of thrust.

### <Description of Reference Signs>

100: Unmanned aerial vehicle
110: Body
111: Air inlet
120: Air duct
120a: Duct body
120-1: Outer wall surface
120-2: Inner wall surface
121: Outer plate
122: Inner plate
123: Second air flow path
124: Injection port
125: Top plate
130: Chevron-shaped injection port
150: Air guide
153: First air flow path

### [Best Mode]

A low-noise thrust generation apparatus and an unmanned aerial vehicle including the same according to an embodiment of the present disclosure applies a new concept capable of improving safety and reducing noise problems while generating thrust comparable to that of an unmanned aerial vehicle that generates thrust by rotating a conventional propeller.

More specifically, the present disclosure is characterized by obtaining additional thrust by generating a static pressure difference (According to Bernoulli's principle) due to an increase in flow rate due to additional air inflow and an increase in flow velocity inside the air duct due to the Coanda effect in addition to a reaction force due to air being injected into a narrow gap.

Through the force generated by the reaction force and static pressure difference as described above, it is possible to generate thrust equivalent to 1 to 2 times a weight of an unmanned aerial vehicle or drone including a payload weight (communication and avionics equipment, etc.).

In addition, it is characterized by generating a noise reduction of 6 dB or more based on Overall sound pressure level(OSPL) compared to conventional single propellers.

Hereinafter, an embodiment of the present disclosure will be described in detail with reference to the accompanying drawings.

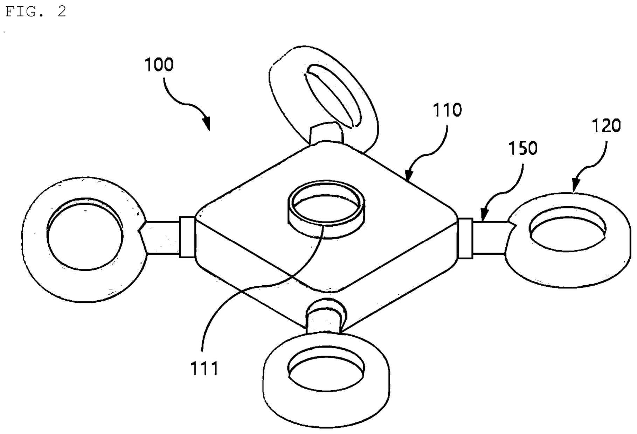

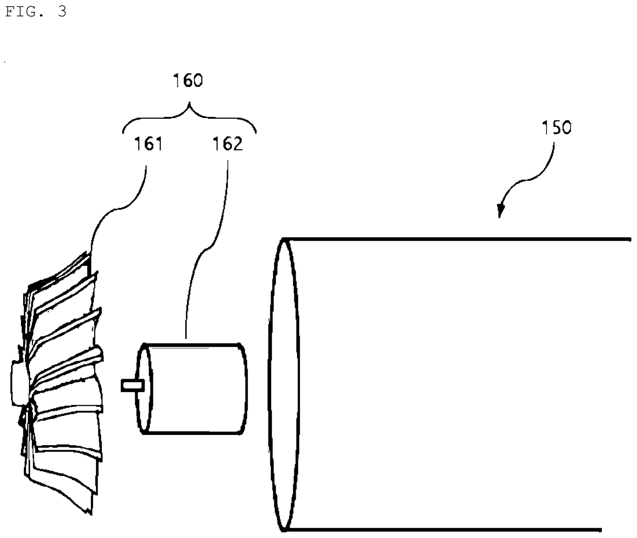

FIG. 2 illustrates a perspective view of an unmanned aerial vehicle 100 according to an embodiment of the present disclosure, and FIG. 3 illustrates an exploded perspective view of an air guide 150 illustrating an air supplier 160 inside the air guide 150 according to an embodiment of the present disclosure.

As illustrated, the unmanned aerial vehicle 100 is configured to include a body 110 in which an air inlet 111 is formed, the air guide 150 for transporting air introduced into the body 110 to an air duct 120 as a thrust generating means, and an air duct 120 for supplying air from the air guide 150 and generating thrust through downward injection.

The body 110 has an air flow space formed inside and is arranged in the center, and a plurality of air ducts 120 may be arranged radially based on the body 110. The body 110 and each air duct 120 may be connected through each of the plurality of air guides 150, and each configuration may be connected to each other so that the air introduced into the body 110 is supplied to the air duct 120 through the air guide 150.

In this case, the unmanned aerial vehicle 100 of the present disclosure does not include a high-speed rotating propeller provided outside, thereby improving safety and reducing noise. To this end, the unmanned aerial vehicle 100 may include an air supplier 160 for supplying (transmitting) air to the air duct 120 inside the body 110 or inside each air guide 150. As illustrated in FIG. 3, the air supplier 160 may be provided on the air guide 150, and the air supplier 160 includes a blower fan 161 for supplying (blowing) air by rotation, and a motor 162 for rotating a fan 162, and the motor 162 may be driven by a battery provided in the unmanned aerial vehicle 100. The air supplier 160 may be provided in a portion adjacent to an air duct 120 on the air guide 150. That is, the air supplier 160 may be provided on a radial outer end portion of the air guide 150.

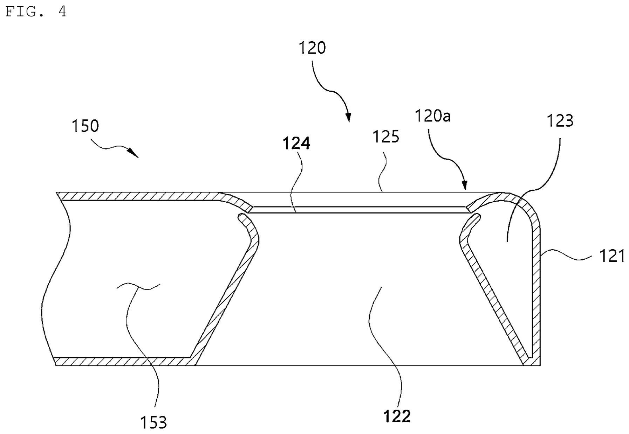

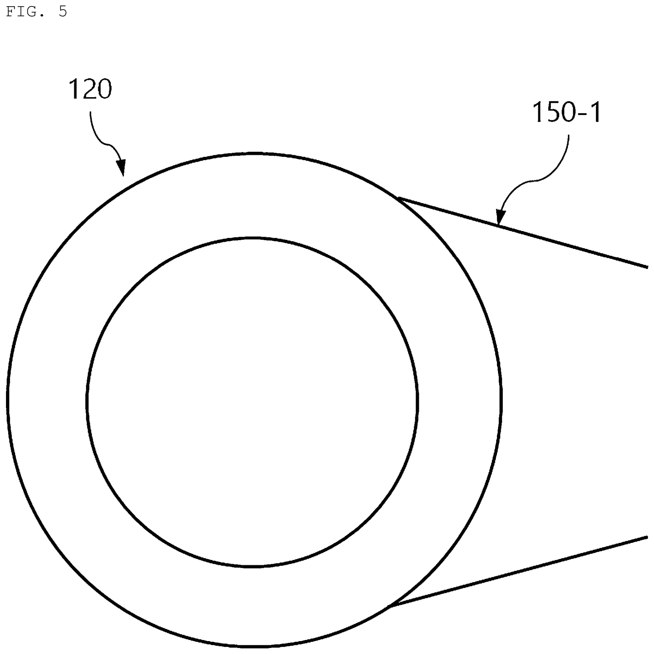

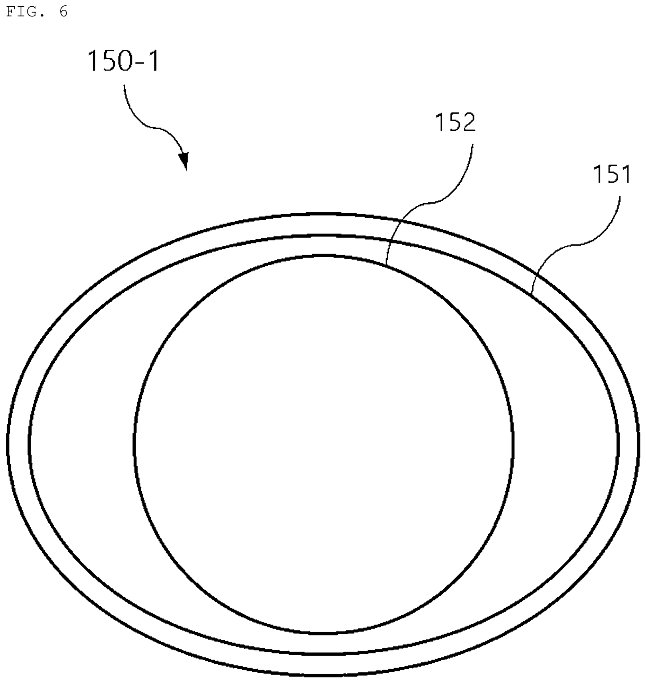

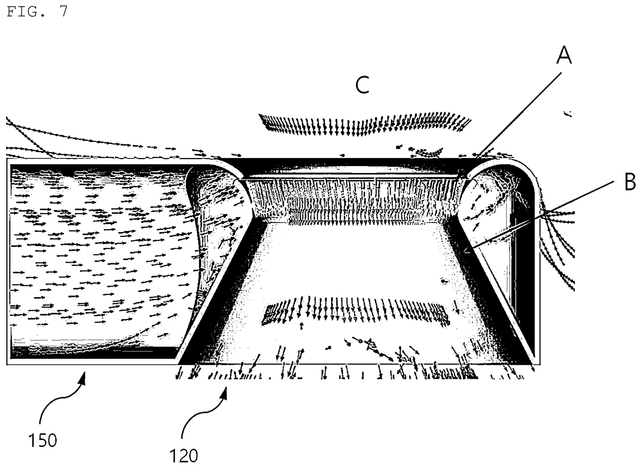

FIG. 4 illustrates a partial cross-sectional perspective view of the thrust generation apparatus 120 and 150 according to a first embodiment of the present disclosure. In addition, FIG. 5 illustrates a partial plan view of the unmanned aerial vehicle 100 illustrating an expanded air guide 150-1 according to an embodiment of the present disclosure, and FIG. 6 illustrates a front view of an expanded air guide 150-1 according to an embodiment of the present disclosure. In addition, FIG. 7 illustrates a diagram illustrating a thrust generation principle of the thrust generation apparatus 120 and 150 of the present disclosure.

As illustrated, the thrust generation apparatus 120 and 150 includes the air guide 150 in which a second air flow path 153 is formed to receive air from the body 10 (see FIG. 2) at a front end and supply the air to the air duct 120 connected to a rear end, and the air duct 120 which includes a first air flow path 123 formed inside and communicates with the second air flow path 153, and which discharges the air supplied to the first air flow path 123 through an injection port 124 to generate the thrust. The air guide 150 may be formed as a circular pipe having an outer diameter of 40 mm and an inner diameter of 38 mm, and serves to transfer air sucked in from the outside to the air duct 120. In FIG. 2, the air guide 150 is illustrated as a pipe shape with a constant cross-sectional area, but it is not limited thereto, and may be formed as the expanded air guide 150-1 whose internal cross-sectional area increases from a radial inner side to an outer side as illustrated in FIGS. 5 and 6. The expanded air guide 150-1 may be configured to minimize a flow resistance of air flowing into the air guide 150-1 and may be configured such that a connection part with the air duct 120 is formed in the form of an expansion pipe. In other words, the air guide 150 may be configured such that a radial outer cross-sectional area 151 is formed larger than a radial inner cross-sectional area 152 and thus the cross-sectional area increases toward the air duct 120.

In addition, the air guide 150 may be coupled to the body 110 so as to be rotatable along an axial direction. Therefore, the air duct 120 is rotated by the axial rotation of the air guide 150 so that the thrust direction may be changed or varied.

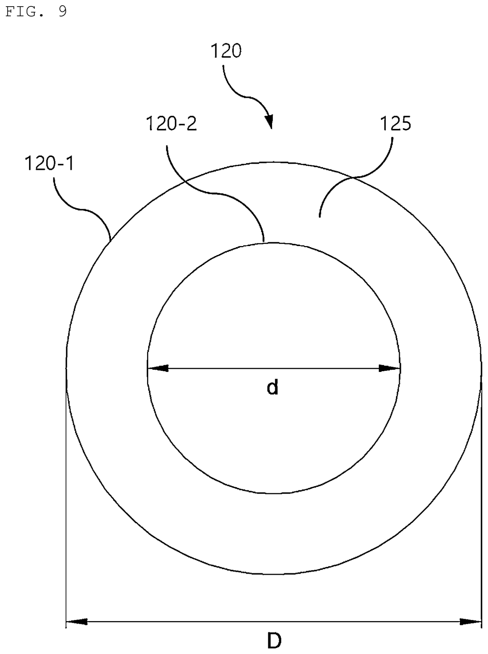

The air duct 120 may have an outer wall surface 120-1 (see FIG. 9) with a maximum diameter of about 66 mm, and an inner wall surface 120-2 (see FIG. 9) with a maximum diameter of about 40 mm. In addition, the air duct 120 includes a duct body 120a formed in a hollow ring shape (donut shape) so that the first air flow path 123 is formed inside. A cross section of the duct body 120a may be formed in an airfoil shape. More specifically, the outer wall surface 120-1 of the duct body 120a may be formed in a shape corresponding to an upper surface of the airfoil, and the inner wall surface 120-2 may be formed in a shape corresponding to a lower surface of the airfoil. In addition, an upper side of the duct body 120a may be a leading edge of the airfoil, and a lower side of the duct body 120a may be a trailing edge.

In addition, the air duct 120 is depicted as a ring shape in the drawing, but may be formed in an oval shape or a track shape, and may be formed in any shape as long as it has an injection space penetrating the center.

The injection port 124 penetrating the inner wall surface 120-2 of the duct body 120a may be formed on the inner wall surface 120-2 of the duct body 120a. In addition, the injection port 124 is continuously formed so that a gap having a predetermined interval forms a closed curve along a circumferential direction. The injection port 124 is connected to the first air flow path 123 and is configured to inject air supplied to the first air flow path 123 to the lower side of the duct body 120a to generate thrust upward of the duct body 120a.

In addition, the injection port 124 may be formed uniformly or non-uniformly with a gap width formed along the circumferential direction. When the injection port 124 is formed non-uniformly, the width of the injection port 124 on the duct body 120a close to the air guide 150 may be formed relatively narrowly, and the width of the injection port 124 on the duct body 120a spaced from the air guide 150 may be formed relatively widely. As another example, the width of the injection port 124 may be formed narrower as it approaches the air guide 150 and wider as it moves away from the air guide 150. The injection port 124 configured as above has the effect of enabling stable thrust generation by allowing air at a uniform flow velocity to be injected in all directions along the circumferential direction of the duct body 120a.

Referring to FIG. 7, the duct body 120a obtains primary thrust by reaction force by injecting air received from the air guide 150 through the injection port 124 having a relatively narrow width (A of the drawing).

The air injected through the injection port 124 moves downward along the inner wall surface of the air duct by the Coanda effect, and additional air inflow C occurs from the upper side open surface of the air duct 120 as kinetic energy is exchanged between the air moving along the inner wall surface and the surrounding air. Due to the additional air inflow, an air flow velocity passing through the center of the duct body 120a increases, which in turn generates a pressure difference in the air by Bernoulli's principle, resulting in secondary thrust by the static pressure difference (B of the drawing).

Accordingly, the air duct 120 may generate thrust that is approximately 2.2 times greater than the reaction force due to simple injection.

To this end, the air duct 120 may be composed of an outer plate 121 that forms the outer wall surface of the duct body 120a and an inner plate 122 that forms the inner wall surface of the duct body 120a. The outer plate 121 and the inner plate 122 are formed by folding a single plate upward, thereby simplifying the manufacturing process.

In addition, the outer plate 121 may be composed of a top plate 125 in which the upper end portion is folded or extended radially inwardly and is formed in a convex round shape upward. In this case, an outer end portion of the top plate 125 may be formed to face a radial inner side of the duct body 120a, and an inner end portion of the top plate 125 may be formed to face a radial outer side of the duct body 120a. In addition, the inner plate 122 is formed to be folded or extended from a lower end of the outer plate 121 to the radial inner side of the duct body 120a, and is extended to be inclined upward as it goes radially inward. In addition, the upper end portion of the inner plate 122 is formed to be folded or extended to the radial outer side of the duct body 120a. In this case, the upper end portion of the inner plate 122 may be formed to be extended so as to overlap the radial outer side of the inner end portion of the top plate 125. In this case, the radial outer side of the inner end portion of the top plate 125 and the radial inner side of the inner end portion of the inner plate 122 may be configured to be spaced apart to form the injection port 124 through the spaced gap.

Through the configuration described above, the air supplied through the second air flow path 153 of the air guide 150 is transferred to the first air flow path 123, and the air supplied to the first air flow path 123 is configured to be injected downward along the inner wall surface of the duct body 120a through the injection port 124 to generate thrust in the air duct 120.

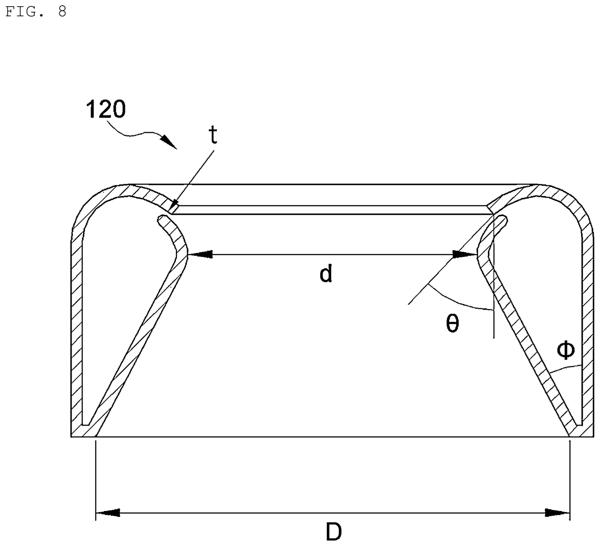

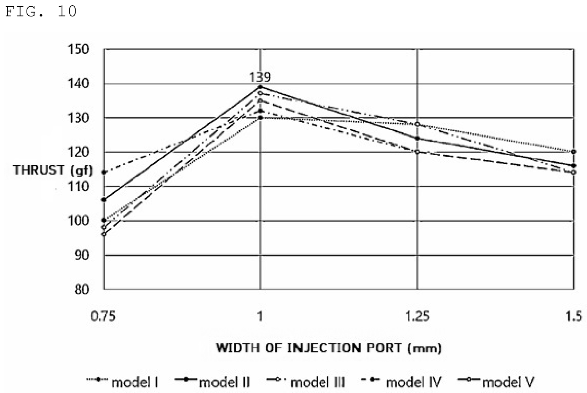

FIG. 8 illustrates a cross-sectional perspective view of the air duct 120 according to the first embodiment of the present disclosure, and FIG. 9 illustrates a plan view of the air duct 120 according to the first embodiment of the present disclosure. In addition, FIG. 10 illustrates a graph illustrating the thrust (in the unit[gf]) according to the width (mm) of the injection port 124 of each model of the air duct 120 having various shapes.

Hereinafter, the configuration and results for maximizing the thrust performance of the thrust generation apparatus 120 and 150 of the present disclosure will be described with reference to the drawings.

As illustrated in FIGS. 8 and 9, the thrust performance of the thrust generation apparatus 120 and 150 may be determined through a width t of the injection port 124, an air injection angle θ, an angle φ of the outer plate 121 and the inner plate 122 of the air duct, an outer diameter D which is a lower end diameter of the outer wall surface 120-1 of the air duct, and an inner diameter d which is a minimum diameter of the inner wall surface 120-2 of the air duct.

For example, since the air duct 120 receives air from the fan and motor, it is very important to determine the appropriate width t of the injection port 124 to maximize the thrust performance. When the width t of the injection port 124 is formed too narrow, the flow resistance of the discharged air is high, so the flow rate of the air supplied from the fan is not sufficient, which may result in low thrust performance. On the other hand, when the width t of the injection port 124 is formed too wide, the flow resistance of the air is reduced, but the flow velocity of the injected air is low, so the reaction force and static pressure difference are reduced, which may result in low thrust performance.

Table 1 below illustrates the thrust (in the unit[gf]) according to the width (mm) of the injection port 124 for each model of the air duct 120 having various shapes.

**[Table 1]**

| **Air Duct Type** | **Width of Injection Port** | | | |
|---|---|---|---|---|
| | **0.75** | **1** | **1.25** | **1.5** |
| **model I** | 100 | 130 | 128 | 120 |
| **model II** | 106 | 139 | 124 | 116 |
| **model III** | 98 | 137 | 128 | 114 |
| **model IV** | 114 | 132 | 120 | 114 |
| **model V** | 96 | 135 | 120 | 114 |

Referring to Table 1 and FIG. 10 above, in the present embodiment, the highest thrust is generated when the width of the injection port is 1 mm, and the thrust decreases when the width of the injection port is wider or narrower than 1 mm.

As described above, it may be seen that the thrust changes depending on the width of the injection port, and it is preferable to derive the width of the injection port that maximizes the thrust depending on the shape or size of the air duct with various design conditions.

As another example, the air injection angle θ of the air duct 120 may also be an important factor in determining the performance of the air duct 120. That is, when the air injection angle θ is designed to be 0°, which is the same as the vertical direction, the reaction force is maximized, but since the additional air inflow is small, the flow velocity of the air passing through the air duct decreases, which means that the thrust due to the static pressure difference decreases. Also, as the angle φ of the air duct outer plate 121 and inner plate 122 increases, that is, as the inner plate approaches the horizontal, the area ratio between the upper end surface into which additional air is introduced and the lower end surface to which air is discharged increases, so the thrust due to the static pressure difference may be increased by maximizing the additional air inflow, but the thrust may be reduced because the frictional force due to the air flowing along the inner wall surface increases.

In other words, the thrust performance of the air duct is not maximized by only increasing the reaction force of the injected air or increasing the flow rate of the additionally introduced air to generate more wind.

Table 2 below illustrates the thrust (in the unit[gf]) according to the air injection angle θ.

**[Table 2]**

| | | | | | | | |
|---|---|---|---|---|---|---|---|
| Air Injection Angle (°) | **70** | **60** | **50** | **45** | **40** | **30** | **20** |
| Thrust (in the unit[gf]) | **138** | **146** | **140** | **140** | **140** | **134** | **128** |

As illustrated, in the present embodiment, the highest thrust is generated when the air injection angle θ is 60°, and it may be seen that the thrust decreases when it is greater than or less than 60°.

As described above, it may be seen that the thrust changes depending on the air injection angle θ, and it is preferable to derive the air injection angle at which the thrust is maximum depending on the shape or size of the air duct with various design conditions.

The thrust generation apparatus was manufactured using a 3D printing processing method using the SLA method, and an experimental measurement device using a load cell was utilized.

In addition, when considering the trade-off between the weight of the unmanned aerial vehicle and the thrust performance of the thrust generation apparatus, the outer diameter D of the air duct may be 55 mm to 70 mm.

The design of the air duct 120 of the present disclosure is a preferred embodiment, and may have an outer diameter of 66 mm, an inner diameter of 40 mm, an air injection angle of 60°, and an inner wall surface angle of 15°, and the results of analyzing the thrust component through flow analysis are as shown in Table 3 below.

**[Table 3]**

| | Size | Ratio |
|---|---|---|
| Total Thrust | 139 gf | 100% |
| Reaction Force due to Air Injection (Fᵢ) | 59 gf | 43% |
| Thrust due to Static Pressure Difference (Fₚ) | 80 gf | 57% |

As shown in Table 3, in addition to the reaction force Fᵢ due to the air injection of the injection port 124, the thrust Fₚ due to the static pressure difference is generated, and by additionally generating 80 gf of thrust which is approximately 57% of the total thrust of 139 gf, it is configured to generate approximately 2.2 times the thrust compared to the simple air injection force.

Meanwhile, there may be a slight error (approximately 7 gf) between the flow analysis results and the experimental results, and this is because it is difficult to accurately predict the frictional force according to the roughness of the air duct surface in the flow analysis, but since the difference is not dominant, a slight difference may occur.

When four thrust generation apparatuses 120 and 150 are mounted, the total thrust generated by the four thrust generation apparatuses 120 and 150 is approximately 560 gf, which generates thrust that may withstand 1.2 times the weight of the unmanned aerial vehicle (approximately 480 g) considering the payload weight.

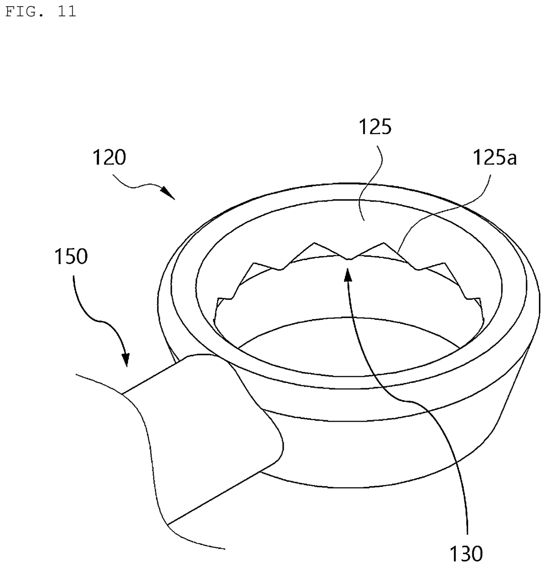

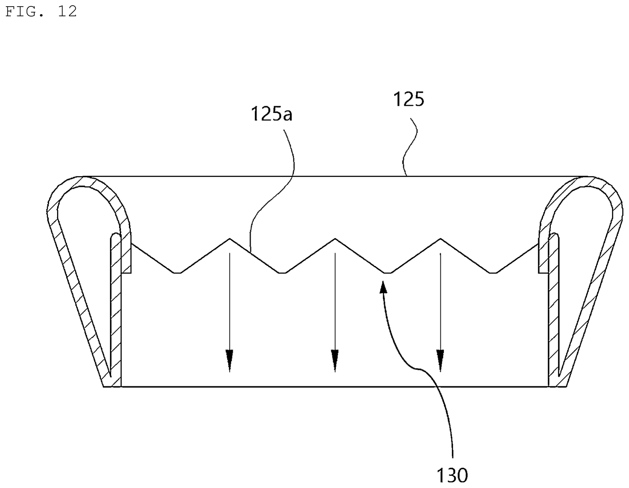

FIG. 11 illustrates a perspective view of the thrust generation apparatus 120 and 150 according to a second embodiment of the present disclosure, and FIG. 12 illustrates a cross-sectional perspective view of the air duct 120 of the thrust generation apparatus 120 and 150 according to the second embodiment of the present disclosure.

As illustrated, the thrust generation apparatus 120 and 150 may be configured with the chevron-shaped injection port 130 at the end portion 125a of the top plate 125 of the duct body 120a to reduce noise caused by air discharged through the air duct 120. The chevron-shaped injection port 130 may be configured in a chevron shape in which the length of the end portion 125a of the top plate 125 is continuously formed along the circumferential direction, and the length of the end portion 125a of the top plate 125 increases and decreases repeatedly along the circumferential direction.

As described above, the biggest feature of the thrust generation apparatus 120 and 150 of the present disclosure is that the noise problem is generated less. The thrust generation apparatus of the present disclosure generates aerodynamic noise caused by air injected into the narrow gap, the injection port 124, which is classified as quadrupole noise. Compared to the existing propeller where dipole noise is dominant, the energy decreases significantly as the sound propagation distance increases, so the noise reduction effect compared to the existing propeller may be expected.

In particular, the air duct according to the second embodiment of the present disclosure may drastically reduce the aerodynamic noise by forming (applying) a structure called a chevron at the end portion 125a of the top plate 125, which is the end of the gap where air is injected.

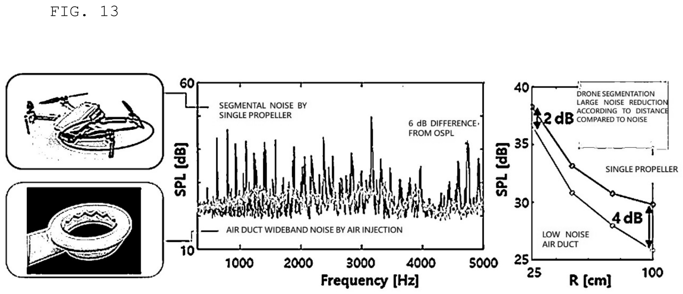

FIG. 13 illustrates the results of comparing a rotational noise spectrum of the air duct 120 to which the chevron-shaped injection port 130 according to the second embodiment of the present disclosure is applied and a propeller that generates a similar level of thrust.

As illustrated, the low-noise air duct 120 in which the chevron-shaped injection port 130 is installed generates about 6 dB lower noise than the existing single propeller based on the OSPL, and when four or more air ducts are installed, a greater noise reduction effect may be expected. In addition, considering that the noise reduction is greater as the noise measurement distance increases, it may be seen that the noise reduction effect is greater at a distance of several tens of meters where the actual drone is used.

Table 4 below compares the sound quality index of the drone using the conventional propeller and the low-noise air duct based on the same thrust standard.

**[Table 4]**

| | Single Propeller of existing drone | Low-noise Air Duct |
|---|---|---|
| FS[vacil] | 0.069 | 0.003 |
| TTNR [dB] | 15.2 | 8.1 |
| PR [dB] | 8.9 | 5.6 |

While the conventional propeller is dominated by segmental noise at frequencies that are integer multiples of a blade pass frequency (BPF), the air duct is dominated by wideband noise such as wind noise. Due to these noise characteristics, the air duct has the advantage of not only reducing noise size compared to the conventional drone propeller, but also being less uncomfortable to hear in terms of sound quality. Even if the noise has the same level, the degree to which it is perceived as uncomfortable or annoying by people may vary, and to quantitatively analyze this, a sound quality metric was utilized.

As described in Table 4 above, fluctuation strength (FS), which is a first index, is a sound quality metric that indicates the degree to which the noise size or frequency is modulated, and the higher this value, the more uncomfortable the noise is to hear. A tone-to-noise ratio (TTNR) and a prominence ratio (PR), which are the other two indices, are sound quality metrics that indicate the degree to which the sound energy is concentrated at certain frequencies. The higher the value, the more irritating the noise is. The air duct has lower values for the three sound quality metrics described above compared to the single propeller of the existing drone. As a result, it may be seen that the air duct has noise characteristics that are less annoying to the human ear, unlike the segmental noise characteristics of the propeller.

The present disclosure is not to be construed as being limited to the above-mentioned exemplary embodiment. The present disclosure may be applied to various fields and may be variously modified by those skilled in the art without departing from the scope of the present disclosure claimed in the claims. Therefore, it is obvious to those skilled in the art that these alterations and modifications fall in the scope of the present disclosure.

## Claims

1. A low-noise thrust generation apparatus, comprising:
an air duct that is formed in a ring shape or an oval shape or a track shape, has a first air flow path formed inside, and includes an injection port communicating with the first air flow path and formed on an inner wall surface to inject air supplied to the first air flow path downward; and
an air guide that has a second air flow path formed inside to be communicated with the first air flow path, and coupled with the air duct to transmit air introduced into the second air flow path to the first air flow path.

2. The low-noise thrust generation apparatus of claim 1, wherein the injection port penetrates the inner wall surface of the air duct and is formed along a circumferential direction on an upper side of the inner wall surface of the air duct.

3. The low-noise thrust generation apparatus of claim 1, further comprising: an air supply means that is provided on the second air flow path of the air guide to supply air to the air duct.

4. The low-noise thrust generation apparatus of claim 3, wherein the air supply means includes a blower fan that transfers the air by rotation, a motor that rotates the fan, and a driving unit that drives the motor.

5. The low-noise thrust generation apparatus of claim 1, wherein the air duct has a cross-section in a shape of an airfoil, and
an outer wall surface is an upper surface of the airfoil, the inner wall surface is a lower surface,
an upper side is a leading edge of the airfoil, and a lower side is a trailing edge of the airfoil.

6. The low-noise thrust generation apparatus of claim 2, wherein the air duct has a cross-sectional area of the inner wall surface that becomes narrower as the inner wall surface goes downward from the injection port by a certain distance, and the cross-sectional area of the inner wall surface that becomes wider as the inner wall surface goes downward from the certain distance to a lower end of the air duct.

7. The low-noise thrust generation apparatus of claim 2, wherein the air duct is composed of an outer plate forming an outer wall surface and an inner plate forming the inner wall surface,
the outer plate includes a top plate that has an upper end portion formed to extend radially inwardly and has an inner end portion convexly rounded upward so that the inner end portion faces radially outward,
the inner plate extends radially inwardly from a lower end of the outer plate, but extends inclinedly upwardly as the inner plate goes radially inward, and
an inner end portion of the inner plate overlaps the inner end portion of the top plate, a gap space is formed between the inner end portion of the top plate and the inner end portion of the inner plate, and the injection port is formed through the gap space.

8. The low-noise thrust generation apparatus of claim 2, wherein an injection angle of the injection port is 40° to 70° based on a vertical direction, and an inclination of the inner plate is 10° to 20° based on the vertical direction.

9. The low-noise thrust generation apparatus of claim 8, wherein a diameter of a lower end of an outer wall surface of the air duct is 55 mm to 70 mm.

10. The low-noise thrust generation apparatus of claim 7, wherein an end portion of the top plate, where the injection port is formed, is formed in a chevron shape in which a length extended from the outer plate repeatedly increases and decreases along the circumferential direction to form a chevron-shaped injection port.

11. The low-noise thrust generation apparatus of claim 7, wherein the injection port has a uniform or non-uniform gap width formed along the circumferential direction of the inner wall surface of the air duct.

12. An unmanned aerial vehicle, comprising:
a body provided with an air inlet; and
the low-noise thrust generation apparatus of any one of claims 1 to 11,
wherein a front end of the air guide is coupled to the body to transmit air introduced into the body to the air duct.

13. The unmanned aerial vehicle of claim 12, wherein the thrust generation apparatus is arranged in plurality, radially spaced apart around the body.

14. The unmanned aerial vehicle of claim 13, further comprising:
an air supply means provided inside the body to supply air to the air guide.

15. The unmanned aerial vehicle of claim 12, wherein the air guide is coupled to the body so as to be rotatable along an axial direction, and changes a thrust direction of the air duct by the rotation.

16. The unmanned aerial vehicle of claim 1, wherein the air guide is formed of a pipe having a constant cross-sectional area or an expanded pipe having an increasing cross-sectional area toward the air duct.
